# EUROPEAN PATENT APPLICATION

(11) **EP 4 734 178 A1**
(43) Date of publication of application: **29.04.2026**
(21) Application number: 25209873.6
(22) Date of filing: 20.10.2025
(51) Int. Cl.: H01M 4/36, H01M 4/485, H01M 4/525, H01M 10/052, H01M 4/131

(54) **POSITIVE ELECTRODE ACTIVE MATERIALS, POSITIVE ELECTRODES, AND RECHARGEABLE LITHIUM BATTERIES**

(30) Priority: 24.10.2024 KR 20240147041; 17.10.2025 KR 20250150998
(71) Applicant: SAMSUNG SDI CO., LTD., Yongin-si, Gyeonggi-do 17084 (KR)
(72) Inventor: CHANG, Donggyu, 17084 Yongin-si (KR); JANG, Jungsue, 17084 Yongin-si (KR); KANG, Taegeun, 17084 Yongin-si (KR); CHOO, Sungho, 17084 Yongin-si (KR); AN, Jisang, 17084 Yongin-si (KR); PARK, Jingyu, 17084 Yongin-si (KR); LEE, Jiho, 17084 Yongin-si (KR)
(74) Representative: Marks & Clerk LLP

(57) **Abstract**

A positive electrode active material includes a first positive electrode active material including a first lithium nickel-cobalt-based composite oxide doped with at least one of B, W, Y, and Mo, the first positive electrode active material being in a form of secondary particles that are formed by agglomerating a plurality of primary particles are agglomerated, with at least a portion of the primary particles having a radial arrangement structure. The positive electrode active material also includes a second positive electrode active material including a second lithium nickel-cobalt-based composite oxide doped with at least one of Zr, Sr, Ce, and Ta, with the second positive electrode active material being in a form of single particles.

## Description

### BACKGROUND

### Field

The present invention relates to positive electrode active materials, positive electrodes including the positive electrode active materials, and rechargeable lithium batteries.

### Description of the Related Art

Portable electric devices such as cell phones, laptop computers, smart phones, and the like, as well as electric vehicles use rechargeable lithium batteries having high energy density and easy portability as a driving power source. Research has been conducted to using rechargeable lithium batteries that have high energy density as a driving power source or power storage power source for hybrid or electric vehicles.

Various positive electrode active materials have been used to realize rechargeable lithium batteries for different applications. Among the materials, lithium nickel-based oxide, lithium nickel-cobalt-based composite oxide, lithium cobalt-based oxide, and lithium nickel-manganese-based composite oxide are mainly used as positive electrode active materials.

Lithium nickel-cobalt-based composite oxide is structurally stable while realizing high capacity, which is advantageous for realizing long cycle-life characteristics and can also realize high energy density. Thus, lithium nickel-cobalt based composite oxide has recently been in used in many products requiring high capacity and high energy density.

### SUMMARY

The present invention seeks to provide a positive electrode active material including a lithium nickel-cobalt-based composite oxide that has high capacity, long cycle-life characteristics, improved high-voltage characteristics and high-temperature characteristics, and that can be manufactured in an economically efficient process. The present invention also seeks to provide a positive electrode and a rechargeable lithium battery including the positive electrode active material.

According to a first aspect the present invention provides a positive electrode active material including: (a) a first positive electrode active material, including a first lithium nickel-cobalt-based composite oxide doped with at least one of B, W, Y, and Mo, the first positive electrode active material being in a form of secondary particles that are formed by agglomerating a plurality of primary particles, with at least a portion of the primary particles having a radial arrangement structure; and (b) a second positive electrode active material including a second lithium nickel-cobalt-based composite oxide doped with at least one of Zr, Sr, Ce, and Ta, the second positive electrode active material being in a form of single particles.

According to a second aspect the present invention provides a positive electrode including a current collector and a positive electrode active material layer on the current collector, wherein the positive electrode active material layer includes the aforementioned positive electrode active material of the first aspect of the invention.

According to a third aspect the present invention provides a rechargeable lithium battery including the aforementioned positive electrode of the second aspect of the invention, a negative electrode, and an electrolyte.

The positive electrode active material according to some example embodiments may maximize capacity while minimizing a production cost, may having long cycle-life characteristics and improved high-voltage characteristics and high-temperature characteristics. When the positive electrode active material used in a rechargeable lithium battery, high initial charge/discharge capacity and efficiency may be achieved under high-voltage operating conditions, and long cycle-life characteristics under high voltage and high temperature conditions may be realized.

**At** least some of the above and other features of the invention are set out in the claims.

### BRIEF DESCRIPTION OF THE DRAWINGS

FIG. 1 is a schematic view of a plate-shaped primary particle according to some example embodiments.
FIG. 2 is a schematic view of a radial arrangement structure in a secondary particle according to some example embodiments.
FIGS. 3 to 6 are schematic views showing rechargeable lithium batteries according to some example embodiments.

### DETAILED DESCRIPTION

Hereinafter, specific embodiments will be described in detail so that those of ordinary skill in the art can easily implement them. However, this disclosure may be embodied in many different forms and is not limited to the example embodiments set forth herein.

The terminology used herein is used to describe embodiments only and is not intended to limit the present disclosure. A singular expression includes a plural expression unless the context clearly dictates otherwise.

**As** used herein, "combination thereof" means a mixture, a laminate, a composite, a copolymer, an alloy, a blend, a reaction product, and the like of the constituents.

It should be understood that terms such as "comprises," "includes," or "have" are intended to designate the presence of an embodied feature, number, step, element, or a combination thereof, but such terms do not preclude the possibility of the presence or addition of one or more other features, number, step, element, or a combination thereof.

In the drawings, the thickness of layers, films, panels, regions, etc., are exaggerated for clarity and like reference numerals designate like elements throughout the specification. It will be understood that when an element such as a layer, film, region, or substrate is referred to as being "on" another element, it can be directly on the other element or intervening elements may also be present. In contrast, when an element is referred to as being "directly on" another element, there are no intervening elements present.

"Layer" herein includes not only a shape formed on the whole surface when viewed from a plan view, but also a shape formed on a partial surface.

In addition, an average particle diameter may be measured by a method well known to those skilled in the art, for example, by a transmission electron microscope (TEM) image or a scanning electron microscope (SEM) image. Alternatively, the average particle diameter may be obtained by measuring with a particle size analyzer such as dynamic light scattering (DLS), performing data analysis, counting the number of particles for each particle size range, and calculating from this. As used herein, when a definition is not otherwise provided, the average particle diameter (D₅₀) may mean the diameter of particles having a cumulative volume of 50 volume% in the particle size distribution. Additionally, when a definition is not otherwise provided, the average particle diameter (D₅₀) may be taken as the diameter of particles having a cumulative volume of 50 volume% in the particle size distribution measured by a particle size analyzer (PSA).

"Or" is not to be construed as an exclusive meaning, for example, "A or B" is construed to include A, B, A+B, and the like.

"Metal" is interpreted as a concept including ordinary metals, transition metals and metalloids (semi-metals).

### Positive Electrode Active Material

A positive electrode active material includes a first positive electrode active material, including a first lithium nickel-cobalt-based composite oxide doped with at least one element selected from B, W, Y, and Mo, and a second positive electrode active material including a second lithium nickel-cobalt-based composite oxide doped with at least one element selected from Zr, Sr, Ce, and Ta. The first positive electrode active material is in a form of secondary particles in which a plurality of primary particles is agglomerated and at least a portion of the primary particles have a radial arrangement structure. The second positive electrode active material is in a form of single particles.

In known lithium nickel-cobalt-based positive electrode active materials, mixing large particles in a form of secondary particles (large secondary particles or large particles) and small particles in a form of single particles (small single particles or small particles) to maximize capacity and energy density and realize long cycle-life characteristics has been proposed. However, because the large particles in the form of secondary particles and the small particles in the form of single particles have different kinetic behaviors that may accelerate the deterioration of the large particles as charging and discharging are repeated, there is often a problem of deteriorating cycle-life characteristics in such large secondary particles/small single particles combinations.

In the present invention, it was discovered that doping an element inhibits large particle growth in the form of a secondary particle such that growth of primary particles forming secondary particles is suppressed even at high temperatures, thereby effectively preventing particle crack due to volume expansion. At the same time, by doping elements that promote grain growth into single particle-shaped small particles, grain growth may be promoted even at low temperatures, making it easier to implement single-particle performance. In addition, embodiments of the present invention can improve cycle-life characteristics by suppressing a problem of accelerated deterioration of the large particles by mixing large particles in the form of secondary particles and small particles in the form of single particles, while maintaining both high capacity and energy density.

### First Positive Electrode Active Material

The first positive electrode active material includes a first lithium nickel-cobalt-based composite oxide doped with at least one element selected from B, W, Y, and Mo. The first positive electrode active material is formed by agglomeration of a plurality of primary particles, and at least a portion of the primary particles are in the form of secondary particles having a radial arrangement structure.

In the first lithium nickel-cobalt-based composite oxide, a nickel content based on 100 mol% of a total metal excluding lithium may be greater than or equal to about 80 mol%, greater than or equal to about 85 mol%, greater than or equal to about 90 mol%, greater than or equal to about 91 mol%, or greater than or equal to about 94 mol%, and less than or equal to about 99 mol%. When the nickel content is in these ranges, high capacity may be achieved and structural stability can be improved.

The first lithium nickel-cobalt-based composite oxide is doped with at least one element selected from B, W, Y, and Mo and may be doped with, for example, each of B, W, Y, and Mo. The first lithium nickel-cobalt-based composite oxide may be doped by one, two, three, or four of the elements. For example, in an embodiment, the first lithium nickel-cobalt-based composite oxide is doped with B and W, and in another embodiment, the first lithium nickel-cobalt-based composite oxide is doped with Y and Mo.

In some examples, the first lithium nickel-cobalt-based composite oxide may be doped with boron. The amount of boron based on 100 wt% of the first lithium nickel-cobalt-based composite oxide may be less than or equal to about 0.3 wt% and greater than or equal to about 0.001 wt%, and may be, for example, less than or equal to about 0.29 wt%, less than or equal to about 0.28 wt%, less than or equal to about 0.27 wt%, less than or equal to about 0.26 wt%, less than or equal to about 0.25 wt%, less than or equal to about 0.24 wt%, or less than or equal to about 0.23 wt% and greater than or equal to about 0.01 wt%, greater than or equal to about 0.02 wt%, greater than or equal to about 0.04 wt%, greater than or equal to about 0.06 wt%, greater than or equal to about 0.08 wt%, or greater than or equal to about 0.1 wt%. In the first lithium nickel-cobalt-based composite oxide, the amount of boron based on 100 mol% of a total metal excluding lithium may be less than or equal to about 3.0 mol% and greater than or equal to about 0.01 mol%, and may be less than or equal to about 2.8 mol%, less than or equal to about 2.6 mol%, less than or equal to about 2.4 mol%, less than or equal to about 2.2 mol%, or less than or equal to about 2.0 mol% and greater than or equal to about 0.1 mol%, greater than or equal to about 0.2 mol%, greater than or equal to about 0.4 mol%, greater than or equal to about 0.6 mol%, greater than or equal to about 0.8 mol%, or greater than or equal to about 1.0 mol%. When the amount of doped boron in the first lithium nickel-cobalt-based oxide composite is in these ranges, the growth of primary particles forming secondary particles is suppressed even at high temperatures, thereby effectively preventing particle crack due to volume expansion and improving the movement speed of lithium ions. In addition, by including the small particles described below, cycle-life characteristics may be improved while maintaining high capacity and energy density.

In some examples, the first lithium nickel-cobalt-based composite oxide may be doped with tungsten. The amount of tungsten based on 100 wt% of the first lithium nickel-cobalt-based composite oxide may be less than or equal to about 2.0 wt% and greater than or equal to about 0.1 wt%, and may be, for example, less than or equal to about 1.8 wt%, less than or equal to about 1.6 wt%, less than or equal to about 1.4 wt%, less than or equal to about 1.2 wt%, less than or equal to about 1.0 wt%, less than or equal to about 0.8 wt%, less than or equal to about 0.6 wt%, less than or equal to about 0.4 wt%, or less than or equal to about 0.2 wt% and greater than or equal to about 0.11 wt%, greater than or equal to about 0.12 wt%, greater than or equal to about 0.13 wt%, greater than or equal to about 0.14 wt%, or greater than or equal to about 0.15 wt%. Additionally, In the first lithium nickel-cobalt-based composite oxide, the amount of tungsten based on 100 mol% of a total metal excluding lithium may be less than or equal to about 1.0 mol% and greater than or equal to about 0.01 mol%, and may be, for example, less than or equal to about 0.8 mol%, less than or equal to about 0.6 mol%, less than or equal to about 0.4 mol%, less than or equal to about 0.2 mol%, or less than or equal to about 0.1 mol% and greater than or equal to about 0.02 mol%, greater than or equal to about 0.04 mol%, greater than or equal to about 0.06 mol%, or greater than or equal to about 0.08 mol%. When the amount of doped tungsten in the first lithium nickel-cobalt-based composite oxide is in these ranges, the growth of primary particles forming secondary particles is suppressed even at high temperatures, thereby effectively preventing particle crack due to volume expansion and increasing the movement speed of lithium ions. In addition, by including the small particles described below, cycle-life characteristics may be improved while maintaining high capacity and energy density.

In some examples, the first lithium nickel-cobalt-based composite oxide may be doped with yttrium. The amount of yttrium based on 100 wt% of the first lithium nickel-cobalt-based composite oxide may be less than or equal to about 0.5 wt% and greater than or equal to about 0.005 wt%, and may be, for example, less than or equal to about 0.4 wt%, less than or equal to about 0.3 wt%, less than or equal to about 0.2 wt%, or less than or equal to about 0.1 wt% and greater than or equal to about 0.01 wt%, greater than or equal to about 0.015 wt%, or greater than or equal to about 0.02 wt%. In the first lithium nickel-cobalt-based composite oxide, the amount of yttrium based on 100 mol% of a total metal excluding lithium may be less than or equal to about 1.0 mol% and greater than or equal to about 0.01 mol%, and may be, for example, less than or equal to about 0.8 mol%, less than or equal to about 0.6 mol%, less than or equal to about 0.4 mol%, or less than or equal to about 0.2 mol% and greater than or equal to about 0.02 mol%, greater than or equal to about 0.03 mol%, or greater than or equal to about 0.04 mol%. When the amount of doped yttrium in the first lithium nickel-cobalt-based composite oxide is in these ranges, the growth of primary particles forming secondary particles is suppressed even at high temperatures, thereby effectively preventing particle crack due to volume expansion and improving the movement speed of lithium ions. In addition, by including the small particles described below, cycle-life characteristics may be improved, while maintaining high capacity and energy density.

In some examples, the first lithium nickel-cobalt-based composite oxide may be doped with molybdenum. The amount of molybdenum based on 100 wt% of the first lithium nickel-cobalt-based composite oxide may be less than or equal to about 3.0 wt% and greater than or equal to about 0.05 wt%, and may be, for example, less than or equal to about 2.8 wt%, less than or equal to about 2.6 wt%, less than or equal to about 2.4 wt%, less than or equal to about 2.2 wt%, less than or equal to about 2.0 wt%, less than or equal to about 1.8 wt%, less than or equal to about 1.6 wt%, or less than or equal to about 1.5 wt% and greater than or equal to about 0.1 wt%, greater than or equal to about 0.15 wt%, greater than or equal to about 0.2 wt%, or greater than or equal to about 0.25 wt%. In the first lithium nickel-cobalt-based composite oxide, the amount of molybdenum based on 100 mol% of a total metal excluding lithium may be less than or equal to about 3.0 mol% and greater than or equal to about 0.05 mol%, and may be, for example, less than or equal to about 2.8 mol%, less than or equal to about 2.6 mol%, less than or equal to about 2.4 mol%, less than or equal to about 2.2 mol%, less than or equal to about 2.0 mol%, less than or equal to about 1.8 mol%, less than or equal to about 1.6 mol%, or less than or equal to about 1.5 mol% and greater than or equal to about 0.1 mol%, greater than or equal to about 0.15 mol%, greater than or equal to about 0.2 mol%, or greater than or equal to about 0.25 mol%. When the amount of molybdenum in the first lithium nickel-cobalt-based oxide composite is in these ranges, the growth of primary particles forming secondary particles is suppressed even at high temperatures, thereby effectively preventing particle crack due to volume expansion and improving the movement speed of lithium ions. In addition, by including the small particles described below, cycle-life characteristics may be improved while maintaining high capacity and energy density.

The first lithium nickel-cobalt-based composite oxide doped with one or more elements selected from the above B, W, Y, and Mo may be represented by Chemical Formula 1.

**[Chemical Formula 1]** Liₐ₁Niₓ₁Co_{y1}Mn_{z1}Al_{w1}B_{c1}W_{d1}Yₑ₁Mo_{f1}M¹_{g1}O_{2-b1}X_{b1}

In Chemical Formula 1, 0.9≤a1≤1.8, 0.8≤x1≤0.98, 0.01≤y1≤0.19, 0≤z1≤0.19, 0≤w1≤0.19, 0≤c1≤0.03, 0≤d1≤0.01, 0≤e1≤0.01, 0≤f1≤0.03, 0≤g1≤0.02, 0.9≤x1+y1+z1+w1+c1+d1+e1+f1+g1≤1.1, 0≤b1≤0.1, M¹ is one or more elements selected from Ba, Ca, Ce, Cr, Cu, Fe, Mg, Nb, Si, Sn, Sr, Ti, V, and Zr, and X is one or more elements selected from F, P, and S. In further examples of Chemical Formula 1, 0.8≤x1≤0.98, 0.01≤y1≤0.19, 0.01≤z1≤0.19, and 0≤w1≤0.19; or 0.9≤x1≤0.98, 0.01≤y1≤0.09, 0.01≤z1≤0.09, and 0≤w1≤0.09.

The first positive electrode active material is in the form of secondary particles formed by agglomeration of a plurality of primary particles. An average particle diameter (D₅₀) of the secondary particles may be about 7 µm to about 30 µm, for example, about 9 µm to about 25 µm, about 10 µm to about 20 µm, or about 12 µm to about 18 µm. As such, the secondary particles may be expressed as large particles. When the particle diameter of the secondary particles is in these ranges, high capacity and high energy density may be realized. Here, the average particle diameter (D₅₀) of the secondary particles may be measured by a particle size analyzer or may be obtained by randomly measuring the size (diameter or major axis length) of about 20 particles in a scanning electron microscope (SEM) image to obtain a particle size distribution and then taking the diameter of particles having a cumulative volume of 50 volume% in the particle size distribution as the average particle diameter.

The first positive electrode active material includes secondary particles in which at least two or more primary particles are agglomerated, at least a portion of which, i.e. the primary particles, have a radial arrangement structure.

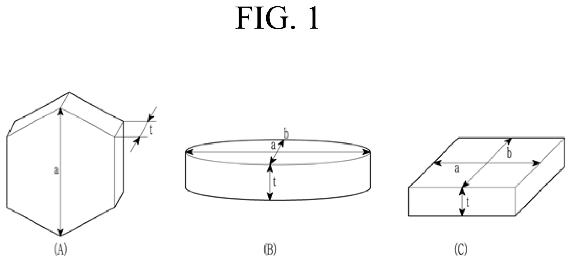

In examples, at least a portion of the primary particles may have a plate shape. FIG. 1 is a schematic view showing the plate shape of the primary particles of the first positive electrode active material. Referring to FIG. 1, the primary particles according to some example embodiments have various shapes while having a basic plate structure. For example, the primary particles may be (A) a polygonal nanoplate shape such as a hexagon, (B) a nanodisk shape, or (C) a rectangular parallelepiped shape. In FIG. 1, "a" is the length of the major axis of the primary particle, "b" is the length of the short axis, and "t" is the thickness. Herein, the length (a) of the major axis means a maximum length based on the widest surface of the primary particle. Thickness (t) is a maximum length of the surface that is approximately perpendicular to the widest surface of the primary particle. The direction including the length (a) of the major axis and the length (b) of the short axis is defined as the plane direction, and the direction of the thickness (t) is defined as the thickness direction. A 'nanoplate' shape may refer to a plate-shaped structure having a thickness (t) of several to several hundred nanometers, and a 'nanodisk' shape may refer to a disk-shaped structure having a thickness (t) of several to several hundred nanometers. The shapes of the primary particles and their lengths of the major and minor axes and thickness may be measured, for example, from a SEM image of the cross-section of the secondary particle.

The thickness (t) of the primary particle may be less than the length (a) of the major axis and length (b) of the short axis, which are the lengths in the plane direction. Among the lengths in the plane direction, the length (a) of the major axis may be the same as or longer than the length (b) of the short axis.

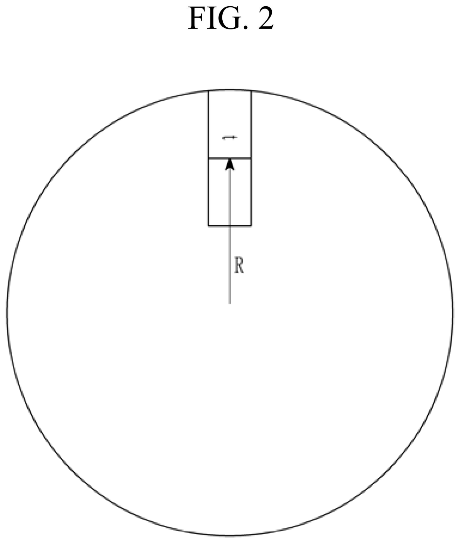

At least a portion of the primary particles in the positive electrode active material have a radial arrangement structure, that is, the major axes of the primary particles may be arranged in a radial direction. FIG. 2 is a schematic view of a radial arrangement structure in a secondary particle according to some example embodiments. Here, the radial arrangement structure means that, as shown in FIG. 2, the thickness (t) direction of the primary particles is perpendicular to, or within an angle of ± 5° of perpendicular to, the radial direction (R) of the secondary particles from the center to the surface of the secondary particles. The radial arrangement structure may be measured, for example, from a SEM image of the cross-section of the secondary particle.

An average length of the primary particles of the secondary particle may be about 0.01 µm to about 5 µm, for example, about 0.01 µm to about 2 µm, about 0.01 µm to about 1 µm, about 0.02 µm to about 1 µm, about 0.05 µm to about 0.5 µm, or about 150 nm to about 500 nm. Here, average length means the average length of the major axis length (a) in the plane direction when the primary particles are plate-shaped. When the primary particles are spherical, the average length means the average particle diameter.

When the primary particles are plate-shaped, an average thickness of the primary particles may be for, example, greater than or equal to about 50 nm, greater than or equal to about 100 nm, greater than or equal to about 200 nm, greater than or equal to about 300 nm, greater than or equal to about 400 nm, greater than or equal to about 500 nm, greater than or equal to about 600 nm, greater than or equal to about 700 nm, greater than or equal to about 800 nm, or greater than or equal to about 900 nm, and, for example, less than or equal to about 5 µm, less than or equal to about 4 µm, less than or equal to about 3 µm, less than or equal to about 2 µm, less than or equal to about 1 µm, less than or equal to about 900 nm, less than or equal to about 800 nm, less than or equal to about 700 nm, less than or equal to about 600 nm, or less than or equal to about 500 nm, for example about 100 nm to about 200 nm. In addition, in the primary particle, a ratio of the average thickness to the average length may be about 1:1 to about 1:10, for example, about 1:1 to about 1:8, about 1:1 to about 1:6, or about 1:2 to about 1:5.

The lengths and thicknesses of the primary particles may be measured with shape analysis equipment such as a scanning electron microscope (SEM). The average length means an arithmetic mean value of about 30 pieces of length data, and the average thickness is an arithmetic mean value of about 30 pieces of thickness data.

When the average length, the average thickness, and the ratio between the average thickness and the average length of the primary particles satisfy the above ranges and the primary particles are radially arranged, it is possible to have a relatively large number of lithium diffusion pathways between grain boundaries on the surface side and a large number of crystal planes capable of lithium transfer are exposed to outside of the primary particles. As such, lithium diffusion is improved and high initial efficiency and capacity can be secured. In addition, when the primary particles are arranged radially, the pores exposed on the surfaces are directed toward the center of the secondary particles, thereby promoting diffusion of lithium. Because the primary particles are radially arranged, uniform contraction and expansion are possible when lithium is deintercalated and/or intercalated. And when lithium is deintercalated, pores exist in the (001) direction, which is the direction in which the particles expand, such that the pores act as a buffer. In addition, due to the size and arrangement of the primary particles, the number of cracks occurring during contraction and expansion of the active material may be lowered, and the internal pores further alleviate the volume change to reduce the cracks generated between the primary particles during charging and discharging. As a result, a rechargeable lithium battery having the primary particles has improved cycle-life characteristics and reduced resistance increase phenomenon.

In embodiments, the first positive electrode active material may be included in an amount of about 40 wt% to about 90 wt%, for example, about 50 wt% to about 85 wt%, or about 70 wt% to about 80 wt%, based on a total of 100 wt% of the first positive electrode active material and the second positive electrode active material. The second positive electrode active material may be included in an amount of about 10 wt% to about 60 wt%, for example, about 15 wt% to about 50 wt%, or about 20 wt% to about 30 wt%. When the amount ratio of the first positive electrode active material and the second positive electrode active material is in these ranges, a problem of accelerated deterioration of the electrode during the charging and discharging process is suppressed such that cycle-life characteristics are improved and high capacity and high energy density may be maintained.

### Second Positive Electrode Active Material

The second positive electrode active material includes a second lithium nickel-cobalt-based composite oxide doped with one or more elements selected from Zr, Sr, Ce, and Ta, and the second electrode active material is in a form of single particles. Each of the single particles may be termed as existing alone without a grain boundary within the particle, composed of one particle (i.e., a single particle), have a monolith structure, have a one body structure, or be a non-agglomerated particle in which particles are not agglomerated with each other but exist as an independent phase in terms of morphology. As such, the particles of the second positive electrode active material may be expressed as a single particle (one body particle, single grain), for example, as a single crystal.

In the second lithium nickel-cobalt-based composite oxide, a nickel content based on 100 mol% of a total metal excluding lithium may be greater than or equal to about 80 mol%, greater than or equal to about 85 mol%, greater than or equal to about 90 mol%, greater than or equal to about 91 mol%, or greater than or equal to about 94 mol% and less than or equal to about 99 mol%. If the nickel content is in these ranges, high capacity may be achieved and structural stability may be improved.

The second lithium nickel-cobalt-based composite oxide is doped with at least one element selected from Zr, Sr, Ce, and Ta. The second lithium nickel-cobalt-based composite oxide may be doped with, for example, two, three, or four of Zr, Sr, Ce, and Ta. For example, the second lithium nickel-cobalt-based composite oxide may be doped with Zr and Sr, and in another example, the second lithium nickel-cobalt-based composite oxide may be doped with Ce and Ta.

In some examples, the second lithium nickel-cobalt-based composite oxide may be doped with zirconium, and an amount of zirconium based on 100 wt% of the second lithium nickel-cobalt-based composite oxide may be less than or equal to about 0.5 wt% and greater than or equal to about 0.01 wt%, for example, less than or equal to about 0.48 wt%, less than or equal to about 0.46 wt%, less than or equal to about 0.44 wt%, less than or equal to about 0.42 wt%, less than or equal to about 0.4 wt%, less than or equal to about 0.38 wt%, less than or equal to about 0.36 wt%, less than or equal to about 0.34 wt%, less than or equal to about 0.32 wt%, or less than or equal to about 0.3 wt%, or greater than or equal to about 0.02 wt%, greater than or equal to about 0.04 wt%, greater than or equal to about 0.06 wt%, greater than or equal to about 0.08 wt%, or greater than or equal to about 0.1 wt%. Also, in the second lithium nickel-cobalt-based composite oxide, the amount of zirconium based on 100 mol% of a total metal excluding lithium may be less than or equal to about 0.4 mol% and greater than or equal to about 0.01 mol%, and may be, for example, less than or equal to about 0.38 mol%, less than or equal to about 0.36 mol%, less than or equal to about 0.34 mol%, less than or equal to about 0.32 mol%, or less than or equal to about 0.3 mol%, and greater than or equal to about 0.02 mol%, greater than or equal to about 0.04 mol%, greater than or equal to about 0.06 mol%, greater than or equal to about 0.08 mol%, or greater than or equal to about 0.1 mol%. When the amount of zirconium in the second lithium nickel-cobalt-based composite oxide is in these ranges, grain growth is promoted even at low temperatures, thereby improving the flux effect, facilitating the implementation of single-particle performance, and improving cycle-life characteristics by mixing with the aforementioned large particles. Further, high capacity and energy density are maintained.

In some examples, the second lithium nickel-cobalt-based composite oxide may be doped with strontium, and the amount of strontium based on 100 wt% of the second lithium nickel-cobalt-based composite oxide may be less than or equal to about 0.4 wt% and greater than or equal to about 0.01 wt%, and may be, for example, less than or equal to about 0.38 wt%, less than or equal to about 0.36 wt%, less than or equal to about 0.34 wt%, less than or equal to about 0.32 wt%, less than or equal to about 0.3 wt%, less than or equal to about 0.28 wt%, less than or equal to about 0.26 wt%, less than or equal to about 0.24 wt%, less than or equal to about 0.22 wt%, or less than or equal to about 0.2 wt% and greater than or equal to about 0.02 wt%, greater than or equal to about 0.04 wt%, greater than or equal to about 0.06 wt%, greater than or equal to about 0.08 wt%, or greater than or equal to about 0.1 wt%. Additionally, in the second lithium nickel-cobalt-based composite oxide, the amount of strontium based on 100 mol% of a total metal excluding lithium may be less than or equal to about 0.3 mol% and greater than or equal to about 0.01 mol%, and may be, for example, less than or equal to about 0.28 mol%, less than or equal to about 0.26 mol%, less than or equal to about 0.24 mol%, less than or equal to about 0.22 mol%, or less than or equal to about 0.2 mol% and greater than or equal to about 0.02 mol%, greater than or equal to about 0.04 mol%, greater than or equal to about 0.06 mol%, greater than or equal to about 0.08 mol%, or greater than or equal to about 0.1 mol%. If the amount of doped strontium in the second lithium nickel-cobalt-based composite oxide is in these ranges, the grain growth is promoted even at low temperatures, thereby improving the flux effect, facilitating the implementation of single-particle performance, and improving cycle-life characteristics by mixing with the aforementioned large particles. Further, high capacity and energy density are maintained.

In some examples, the second lithium nickel-cobalt-based composite oxide may be doped with cerium, and the amount of cerium based on 100 wt% of the second lithium nickel-cobalt-based composite oxide may be less than or equal to about 0.2 wt% and greater than or equal to about 0.01 wt%, and may be, for example, less than or equal to about 0.18 wt%, less than or equal to about 0.16 wt%, less than or equal to about 0.14 wt%, less than or equal to about 0.12 wt%, or less than or equal to about 0.1 wt% and greater than or equal to about 0.02 wt%, greater than or equal to about 0.03 wt%, or greater than or equal to about 0.04 wt%. Additionally, in the second lithium nickel-cobalt-based composite oxide, the amount of cerium based on 100 mol% of a total metal excluding lithium may be less than or equal to about 0.2 mol% and greater than or equal to about 0.01 mol%, and may be, for example, less than or equal to about 0.18 mol%, less than or equal to about 0.16 mol%, less than or equal to about 0.14 mol%, less than or equal to about 0.12 mol%, or less than or equal to about 0.1 mol% and greater than or equal to about 0.02 mol%, greater than or equal to about 0.03 mol%, greater than or equal to about 0.04 mol%, or greater than or equal to about 0.05 mol%. If the amount of doped cerium in the second lithium nickel-cobalt-based composite oxide is in these ranges, the grain growth is promoted even at low temperatures, thereby improving the flux effect, facilitating the implementation of single-particle performance, and improving cycle-life characteristics by mixing with the aforementioned large particles. Further, high capacity and energy density are maintained.

In some examples, the second lithium nickel-cobalt-based composite oxide can be doped with tantalum, and the amount of tantalum based on 100 wt% of the second lithium nickel-cobalt-based composite oxide may be less than or equal to about 0.3 wt% and greater than or equal to about 0.01 wt%, and may be, for example, less than or equal to about 0.28 wt%, less than or equal to about 0.26 wt%, less than or equal to about 0.24 wt%, less than or equal to about 0.22 wt%, or less than or equal to about 0.2 wt%, and greater than or equal to about 0.02 wt%, greater than or equal to about 0.04 wt%, greater than or equal to about 0.06 wt%, greater than or equal to about 0.08 wt%, or greater than or equal to about 0.1 wt%. Additionally, in the second lithium nickel-cobalt-based composite oxide, the amount of tantalum based on 100 mol% of a total metal excluding lithium may be less than or equal to about 0.2 mol% and greater than or equal to about 0.01 mol%, and may be, for example, less than or equal to about 0.18 mol%, less than or equal to about 0.16 mol%, less than or equal to about 0.14 mol%, less than or equal to about 0.12 mol%, or less than or equal to about 0.1 mol% and greater than or equal to about 0.02 mol%, greater than or equal to about 0.03 mol%, greater than or equal to about 0.04 mol%, or greater than or equal to about 0.05 mol%. If the amount of doped tantalum in the second lithium nickel-cobalt-based composite oxide is in these ranges, the grain growth is promoted even at low temperatures, thereby improving the flux effect, facilitating the implementation of single-particle performance, and improving cycle-life characteristics by mixing with the aforementioned large particles. Further, high capacity and energy density are maintained.

The second lithium nickel-cobalt-based composite oxide doped with one or more elements selected from Zr, Sr, Ce, and Ta may be represented by Chemical Formula 2.

**[Chemical Formula 2]** Liₐ₂Niₓ₂Co_{y2}Mn_{z2}Al_{w2}Zr_{c2}SR_{d2}Ceₑ₂Ta_{f2}M²_{g2}O_{2-b2}X_{b2}

In Chemical Formula 2, 0.9≤a2≤1.8, 0.8≤x2≤0.98, 0.01≤y2≤0.19, 0≤z2≤0.19, 0≤w2≤0.19, 0≤c2≤0.004, 0≤d2≤0.003, 0≤e2≤0.002, 0≤f2≤0.002, 0≤g2≤0.02, 0.9≤x2+y2+z2+w2+c2+d2+e2+f2+g2≤1.1, 0≤b2≤0.1, M² is one or more elements selected from Ba, Ca, Cr, Cu, Fe, Mg, Nb, Si, Sn, Ti, and V, and X is one or more elements selected from F, P, and S. In further examples of Chemical Formula 2, 0.8≤x2≤0.98, 0.01≤y2≤0.19, 0.01≤z2≤0.19, and 0≤w2≤0.19; or 0.9≤x2≤0.98, 0.01≤y2≤0.09, 0.01≤z2≤0.09, and 0≤w2≤0.09.

The second positive electrode active material may be in the form of single particles, the second positive electrode active material may have an average particle diameter (D₅₀) of the single particle of about 0.5 µm to about 4 µm, for example, about 0.6 µm to about 3.8 µm, about 0.7 µm to about 3.6 µm, about 0.8 µm to about 3.4 µm, about 0.9 µm to about 3.2 µm, or about 1 µm to about 3 µm, and may thereby be expressed as small particles. When the particle diameter of the second positive electrode active material particles is in these ranges, the energy density of the positive electrode can be maximized and deterioration of the large particles may be alleviated. The average particle diameter (D₅₀) of the single particles may be measured by a particle size analyzer or may be obtained by randomly measuring the size (diameter or major axis length) of about 20 particles in a scanning electron microscope (SEM) image to obtain a particle size distribution and then taking the diameter of particles having a cumulative volume of 50 volume% in the particle size distribution as the average particle diameter.

### Positive Electrode

A positive electrode includes a current collector and a positive electrode active material layer on the current collector, with the positive electrode active material layer including the aforementioned positive electrode active material. The positive electrode active material layer may further include other types of positive electrode active materials in addition to the positive electrode active material. Additionally, the positive electrode active material layer may optionally include a binder, a conductive material, or a combination thereof.

The positive electrode active material layer may have a density of about 3.4 g/cc to about 3.9 g/cc, for example, about 3.5 g/cc to about 3.8 g/cc, or about 3.6 g/cc to about 3.7 g/cc. The density of the positive electrode active material layer refers to the ratio of the weight to the volume of the pressed positive active material layer. The density of the positive electrode active material layer can be measured by measuring a cross-sectional area, thickness and weight of the positive active material layer excluding the positive electrode current collector, calculating the volume by multiplying the cross-sectional area and the thickness, and dividing the weight by the volume. The density of the positive electrode active material layer means density of the positive electrode in a compressed state. If the density of the positive electrode active material layer is in these ranges, very high energy density and high capacity may be realized. However, in such a high-density positive electrode, a problem may occur in which particles are broken or damaged due to repeated charging and discharging. However, according to the positive electrode design of some example embodiments of the present disclosure, very high density may be realized and the damage to the large particles may be effectively suppressed.

A cracked first positive electrode active material may be about 0 to about 50 number%, for example, about 1 number% to about 20 number%, or about 3 number% to about 10 number% of the total first positive electrode active material in the positive electrode active material layer. This may mean the number of first positive electrode active materials in which cracks have occurred, expressed as a ratio, when the total number of first positive electrode active materials is 100 number % in the positive electrode active material layer. Whether or not there is cracking, and a crack occurrence rate, may be measured through an scanning electron microscopy (SEM) or transmission electron microscopy (TEM) image of a cross-section of the positive electrode plate. If the amount of cracked first positive electrode active material out of the total first positive electrode active material in the positive electrode active material layer is in these ranges, deterioration of large particles resulting from repeated charging and discharging may be effectively prevented, thereby improving cycle-life characteristics of the battery.

A thickness of the positive electrode active material layer may be about 10 µm to about 200 µm, for example, about 10 µm to about 180 µm, about 10 µm to about 160 µm, about 20 µm to about 160 µm, about 20 µm to about 140 µm, about 20 µm to about 120 µm, about 30 µm to about 120 µm, or about 30 µm to about 100 µm. If the thickness of the positive electrode active material layer is in these ranges, high capacity can be achieved, and the problem of large particles deterioration due to repeated charging and discharging can be effectively prevented, thereby improving cycle-life characteristics of the battery.

### Binder

The binder may improve binding properties of positive electrode active material particles with one another and with a current collector. Examples of binders include polyvinyl alcohol, carboxymethyl cellulose, hydroxypropyl cellulose, diacetyl cellulose, polyvinyl chloride, carboxylated polyvinyl chloride, polyvinyl fluoride, an ethylene oxide-containing polymer, polyvinylpyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, or nylon. But the present disclosure is not limited to these examples.

### Conductive Material

The conductive material may be included to provide electrode conductivity. Any electrically conductive material may be used as a conductive material provided it does not cause a chemical change in a battery. Examples of the conductive material may include a carbon-based material such as natural graphite, artificial graphite, carbon black, acetylene black, Ketjen black, a carbon fiber, a carbon nanofiber, a carbon nanotube, and the like; a metal-based material of a metal powder or a metal fiber including copper, nickel, aluminium, silver, and the like; a conductive polymer such as a polyphenylene derivative; or a mixture thereof.

Based on 100 wt% of the positive electrode active material layer, an amount of the positive electrode active material may be about 90 wt% to about 99.8 wt%, or about 95 wt% to about 99 wt%. Each amount of the binder and the conductive material may be about 0.1 wt% to about 5 wt%, or about 0.5 wt% to about 2.5 wt%.

### Current Collector

The current collector according to some example embodiments of the present disclosure is not particularly limited as long as it is conductive and does not cause a chemical change in the rechargeable lithium battery. Specific examples include aluminium (Al), stainless steel (SUS), indium (In), magnesium (Mg), titanium (Ti), iron (Fe), cobalt (Co), nickel (Ni), zinc (Zn), germanium (Ge), lithium (Li), or a combination thereof.

### Rechargeable Lithium Battery

A rechargeable lithium battery according to the invention includes the aforementioned positive electrode, a negative electrode and an electrolyte. As an example, the rechargeable lithium battery may include a positive electrode, a negative electrode, a separator disposed between the positive electrode and the negative electrode, and an electrolyte solution.

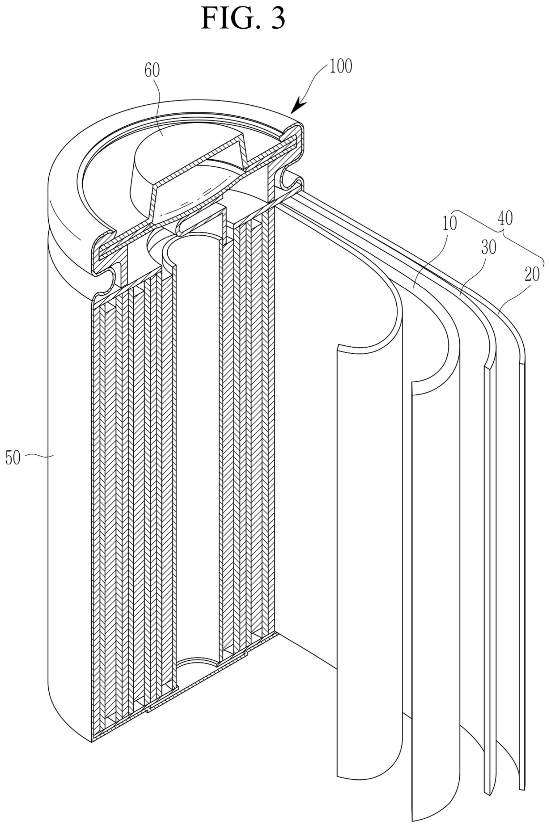

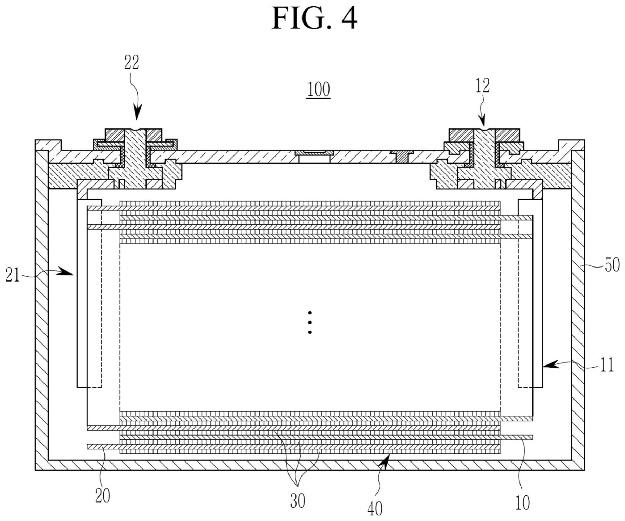

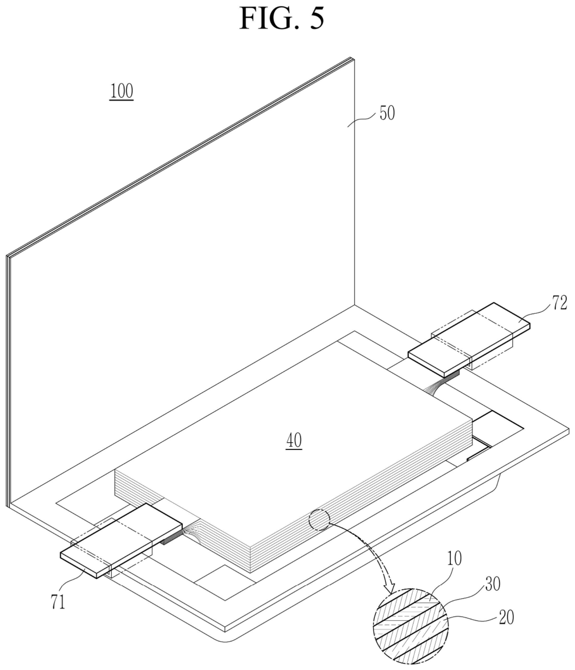

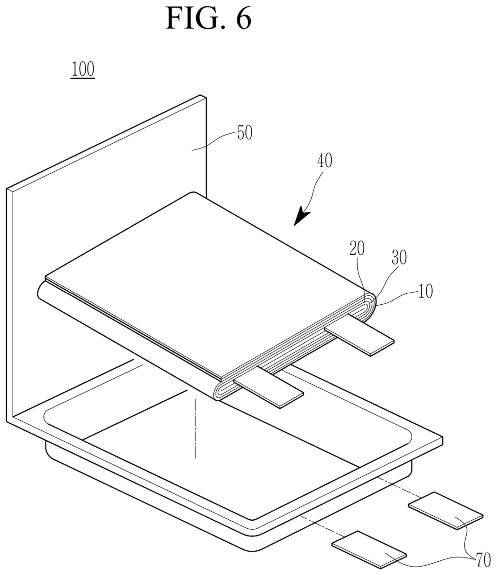

The rechargeable lithium battery may be cylindrical, prismatic, pouch, coin, etc. depending on the shape. FIGS. 3 to 6 are schematic views showing the rechargeable lithium battery according to some example embodiments; FIG. 3 is a cylindrical battery, FIG. 4 is a prismatic battery, and FIGS. 5 and 6 are a pouch-shaped battery. Referring to FIGS. 3 to 6, a rechargeable lithium battery 100 includes an electrode assembly 40 with a separator 30 interposed between the positive electrode 10 and the negative electrode 20, and a case 50 in which the electrode assembly 40 is housed. The positive electrode 10, the negative electrode 20, and the separator 30 may be impregnated with an electrolyte solution (not shown). The rechargeable lithium battery 100 may include a sealing member 60 that seals the case 50 as shown in FIG. 3. As shown in FIG. 4, the rechargeable lithium battery 100 may include a positive electrode lead tab 11, a positive electrode terminal 12, a negative electrode lead tab 21, and a negative electrode terminal 22. As shown in FIGS. 5 and 6, the rechargeable lithium battery 100 includes an electrode tab 70, that is, a positive electrode tab 71 and a negative electrode tab 72 forming an electrical path for inducing the current formed in the electrode assembly 40 to outside of the rechargeable battery.

### Negative Electrode

The negative electrode includes a current collector and a negative electrode active material layer on the current collector. The negative electrode active material layer includes a negative electrode active material and may further include a binder, a conductive material, or a combination thereof.

The negative electrode active material may include a material that reversibly intercalates/deintercalates lithium ions, a lithium metal, a lithium metal alloy, a material capable of doping/dedoping lithium, or transition metal oxide.

The material that reversibly intercalates/deintercalates lithium ions may include, for example, crystalline carbon, amorphous carbon, or a combination thereof as a carbon-based negative electrode active material. The crystalline carbon may be irregular, or sheet, flake, spherical, or fiber shaped natural graphite or artificial graphite. The amorphous carbon may be a soft carbon, a hard carbon, a mesophase pitch carbonization product, calcined coke, and the like.

The lithium metal alloy includes an alloy of lithium and a metal selected from Na, K, Rb, Cs, Fr, Be, Mg, Ca, Sr, Si, Sb, Pb, In, Zn, Ba, Ra, Ge, Al, and Sn.

The material capable of doping/dedoping lithium may be a Si-based negative electrode active material or a Sn-based negative electrode active material. The Si-based negative electrode active material may include silicon, a silicon-carbon composite, SiOₓ (0<x≤2), a Si-Q alloy, or a combination thereof. In the formula Si-Q, Q is an element selected from an alkali metal, an alkaline-earth metal, a Group 13 element, a Group 14 element (excluding Si), a Group 15 element, a Group 16 element, a transition metal, a rare earth element, and a combination thereof, for example Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Tl, Ge, P, As, Sb, Bi, S, Se, Te, Po, and a combination thereof. The Sn-based negative electrode active material may be Sn, SnO₂, a Sn alloy, or a combination thereof.

The silicon-carbon composite may be a composite of silicon and amorphous carbon. An average particle diameter (D₅₀) of the silicon-carbon composite particles may be, for example, about 0.5 µm to about 20 µm. According to some example embodiments of the present disclosure, the silicon-carbon composite may be in the form of silicon particles and amorphous carbon coated on the surface of the silicon particles. For example, it may include a secondary particles (core) in which silicon primary particles are assembled and an amorphous carbon coating layer (shell) on the surfaces of the secondary particles. The amorphous carbon may also be present between the silicon primary particles, for example, the silicon primary particles may be coated with amorphous carbon. The secondary particles may be dispersed in an amorphous carbon matrix.

The silicon-carbon composite may further include crystalline carbon. For example, the silicon-carbon composite may include a core including crystalline carbon and silicon particles and an amorphous carbon coating layer on the surface of the core. The crystalline carbon may be artificial graphite, natural graphite, or a combination thereof. The amorphous carbon may include soft carbon or hard carbon, a mesophase pitch carbonized product, and calcined coke.

If the silicon-carbon composite includes silicon and amorphous carbon, a silicon content may be about 10 wt% to about 50 wt% and an amount of amorphous carbon may be about 50 wt% to about 90 wt% based on 100 wt% of the silicon-carbon composite. If the composite includes silicon, amorphous carbon, and crystalline carbon, a silicon content may be about 10 wt% to about 50 wt%, an amount of the crystalline carbon may be about 10 wt% to about 70 wt%, and an amount of the amorphous carbon may be about 20 wt% to about 40 wt% based on 100 wt% of the silicon-carbon composite.

A thickness of the amorphous carbon coating layer may be about 5 nm to about 100 nm. An average particle diameter (D₅₀) of the silicon particles (primary particles) may be about 10 nm to about 1 µm, or about 10 nm to about 200 nm. The silicon particles may exist as silicon alone, in the form of a silicon alloy, or in an oxidized form. The oxidized form of silicon may be represented by SiOₓ (0<x≤2). The atomic content ratio of Si:O, which indicates a degree of oxidation, may be about 99:1 to about 33:67. As used herein, when a definition is not otherwise provided, an average particle diameter (D₅₀) indicates a particle where a cumulative volume is about 50 volume% in a particle size distribution.

The Si-based negative electrode active material or Sn-based negative electrode active material may be mixed with the carbon-based negative electrode active material. When the Si-based negative electrode active material or Sn-based negative electrode active material and the carbon-based negative electrode active material are mixed and used, the mixing ratio may be a weight ratio of about 1:99 to about 90:10.

### Binder

The binder functions to adhere the negative electrode active material particles to each other and also to adhere the negative electrode active material to the current collector. The binder may be a non-aqueous binder, an aqueous binder, a dry binder, or a combination thereof.

The non-aqueous binder may include polyvinyl chloride, carboxylated polyvinyl chloride, polyvinyl fluoride, an ethylene-propylene copolymer, polystyrene, polyurethane, polytetrafluoroethylene, polyvinylidene fluoride, polyethylene, polypropylene, polyamideimide, polyimide, or a combination thereof.

The aqueous binder may include a styrene-butadiene rubber, a (meth)acrylated styrene-butadiene rubber, a (meth)acrylonitrile-butadiene rubber, a (meth)acrylic rubber, a butyl rubber, a fluorine rubber, polyethylene oxide, polyvinylpyrrolidone, polyepichlorohydrin, polyphosphazene, poly(meth)acrylonitrile, an ethylene-propylene-diene copolymer, polyvinylpyridine, chlorosulfonated polyethylene, latex, a polyester resin, a (meth)acrylic resin, a phenol resin, an epoxy resin, polyvinyl alcohol, or a combination thereof.

When an aqueous binder is used as the negative electrode binder, a cellulose-based compound capable of imparting viscosity may be further included. As the cellulose-based compound, one or more of carboxymethyl cellulose, hydroxypropylmethyl cellulose, methyl cellulose, or alkali metal salts thereof may be mixed and used. The alkali metal may be Na, K, or Li.

The dry binder may be a polymer material capable of becoming a fiber, and may be, for example, polytetrafluoroethylene, polyvinylidene fluoride, a polyvinylidene fluoride-hexafluoropropylene copolymer, polyethylene oxide, or a combination thereof.

### Conductive Material

The conductive material is included to provide electrode conductivity and any electrically conductive material may be used that does not cause a chemical change in a rechargeable battery. Examples of the conductive material include a carbon-based material such as natural graphite, artificial graphite, carbon black, acetylene black, ketjen black, a carbon fiber, a carbon nanofiber, a carbon nanotube, and the like; a metal-based material of a metal powder or a metal fiber including copper, nickel, aluminium, silver, and the like; a conductive polymer such as a polyphenylene derivative; or a mixture thereof.

An amount of the negative electrode active material may be about 95 wt% to about 99.5 wt% based on 100 wt% of the negative electrode active material layer, and an amount of the binder may be about 0.5 wt% to about 5 wt% based on 100 wt% of the negative electrode active material layer. For example, the negative electrode active material layer may include about 90 wt% to about 99 wt% of the negative electrode active material, about 0.5 wt% to about 5 wt% of the binder, and about 0.5 wt% to about 5 wt% of the conductive material.

### Current Collector

The negative electrode current collector may include, for example, indium (In), copper (Cu), magnesium (Mg), stainless steel, titanium (Ti), iron (Fe), cobalt (Co), nickel (Ni), zinc (Zn), aluminium (Al), germanium (Ge), lithium (Li), or an alloy thereof. The negative electrode current collector may be in the form of a foil, sheet, or foam. A thickness of the negative electrode current collector may be, for example, about 1 µm to about 20 µm, about 5 µm to about 15 µm, or about 7 µm to about 10 µm.

### Electrolyte

The electrolyte for a rechargeable lithium battery may be an electrolyte solution, which may include a non-aqueous organic solvent and a lithium salt.

The non-aqueous organic solvent serves as a medium for transmitting ions taking part in the electrochemical reaction of a battery. The non-aqueous organic solvent may be a carbonate-based, ester-based, ether-based, ketone-based, or alcohol-based solvent, an aprotic solvent, or a combination thereof.

The carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and the like. The ester-based solvent may include methyl acetate, ethyl acetate, n-propyl acetate, dimethyl acetate, methyl propionate, ethyl propionate, decanolide, mevalonolactone, valerolactone, caprolactone, and the like. The ether-based solvent may include dibutyl ether, tetraethylene glycol dimethyl ether (tetraglyme), bis(2-methoxyethyl) ether (diglyme), dimethoxyethane, 2-methyltetrahydrofuran, 2,5-dimethyltetrahydrofuran, tetrahydrofuran, and the like. In addition, the ketone-based solvent may include cyclohexanone, and the like. The alcohol-based solvent may include ethanol, isopropyl alcohol, and the like and the aprotic solvent may include nitriles such as R-CN (wherein R is a C2 to C20 linear, branched, or cyclic hydrocarbon group, a double bond, an aromatic ring, or an ether bond), and the like; amides such as dimethylformamide; dioxolanes such as 1,3-dioxolane, 1,4-dioxolane, and the like; sulfolanes, and the like.

The non-aqueous organic solvent may be used alone or in a mixture of two or more types. When two or more types are used in a mixture, a mixing ratio can be appropriately adjusted according to the desired battery performance.

When using a carbonate-based solvent, a cyclic carbonate and a chain carbonate may be mixed and used. The cyclic carbonate and the chain carbonate may be mixed in a volume ratio of about 1:1 to about 1:9.

The non-aqueous organic solvent may further include an aromatic hydrocarbon-based organic solvent. For example, a carbonate-based solvent and an aromatic hydrocarbon-based organic solvent may be mixed and used in a volume ratio of about 1:1 to about 30:1.

The electrolyte solution may further include vinyl ethylene carbonate, vinylene carbonate, or an ethylene carbonate-based compound to improve battery cycle-life.

Examples of the ethylene carbonate-based compound include fluoroethylene carbonate, difluoroethylene carbonate, chloroethylene carbonate, dichloroethylene carbonate, bromoethylene carbonate, dibromoethylene carbonate, nitroethylene carbonate, cyanoethylene carbonate, and the like.

The lithium salt dissolved in the organic solvent supplies lithium ions in a battery, enables a basic operation of a rechargeable lithium battery, and improves transportation of the lithium ions between positive and negative electrodes. Examples of the lithium salt may include at least one of LiPF₆, LiBF₄, LiSbF₆, LiAsF₆, LiClO₄, LiAlO₂, LiAlCl₄, LiPO₂F₂, LiCl, Lil, LiN(SO₃C₂F₅)₂, Li(FSO₂)₂N (lithium bis(fluorosulfonyl)imide; LiFSI), LiC₄F₉SO₃, LiN(CₓF₂ₓ₊₁SO₂)(C_{y}F_{2y+1}SO₂) (wherein x and y are integers of 1 to 20), lithium trifluoromethane sulfonate, lithium tetrafluoroethanesulfonate, lithium difluorobis(oxalato)phosphate (LiDFBOP), and lithium bis(oxalato) borate (LiBOB).

A concentration of lithium salt may be within the range of about 0.1 M to about 2.0 M. If the concentration of lithium salt is within this range, the electrolyte solution has appropriate ionic conductivity and viscosity. Thus, excellent performance can be achieved and lithium ions can move effectively.

### Separator

Depending on the type of the rechargeable lithium battery, a separator may be present between the positive electrode and the negative electrode. The separator may include polyethylene, polypropylene, polyvinylidene fluoride, or a multilayer film of two or more layers thereof, and a mixed multilayer film such as a polyethylene/polypropylene two-layer separator, polyethylene/polypropylene/polyethylene three-layer separator, polypropylene/polyethylene/polypropylene three-layer separator, and the like.

The separator may include a porous substrate and a coating layer including an organic material, an inorganic material, or a combination thereof on one or both surfaces of the porous substrate.

The porous substrate may be a polymer film formed of any a polymer selected from polyolefin such as polyethylene and polypropylene, polyester such as polyethylene terephthalate and polybutylene terephthalate, polyacetal, polyamide, polyimide, polycarbonate, polyether ketone, polyarylether ketone, polyetherimide, polyamideimide, polybenzimidazole, polyethersulfone, polyphenylene oxide, a cyclic olefin copolymer, polyphenylene sulfide, polyethylene naphthalate, a glass fiber, and polytetrafluoroethylene (e.g. TEFLON^{®}), or a copolymer or mixture of two or more thereof.

The porous substrate may have a thickness of about 1 µm to about 40 µm, for example, about 1 µm to about 30 µm, about 1 µm to about 20 µm, about 5 µm to about 15 µm, or about 10 µm to about 15 µm.

The organic material may include a (meth)acrylic copolymer including a first structural unit derived from (meth)acrylamide, and a second structural unit including at least one of a structural unit derived from (meth)acrylic acid or (meth)acrylate, and a structural unit derived from (meth)acrylamidosulfonic acid or a salt thereof.

The inorganic material may include inorganic particles selected from Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and a combination thereof. But the present disclosure is not limited to. An average particle diameter (D₅₀) of the inorganic particles may be about 1 nm to about 2000 nm, for example, about 100 nm to about 1000 nm, or about 100 nm to about 700 nm.

The organic material and the inorganic material may be mixed in one coating layer, or a coating layer including an organic material and a coating layer including an inorganic material may be stacked.

The thickness of the coating layer may be about 0.5 µm to about 20 µm, for example, about 1 µm to about 10 µm, or about 1 µm to about 5 µm.

Examples and comparative examples of the present disclosure are described below. However, the present disclosure is not limited to the following examples.

### Example 1

### Preparation of First Positive Electrode Active Material

Ni_{0.96}Co_{0.02}Mn_{0.02}(OH)₂, LiOH, and B₂O₃ were mixed in a mole ratio of 1:1.03:0.0075 and then heat-treated at 750 °C for 8 hours under an oxygen atmosphere to manufacture a first positive electrode active material including a first lithium nickel-cobalt-based composite oxide having a composition of Li_{1.03}Ni_{0.945}Co_{0.02}Mn_{0.02}B_{0.015}O₂ in the form of secondary particles having an average particle diameter (D₅₀) of 13 µm and in which at least a portion of primary particles were radially arranged.

### Preparation of Second Positive Electrode Active Material

Ni_{0.97}Co_{0.02}Mn_{0.01}(OH)₂, LiOH, and ZrO₂ were mixed in a mole ratio of 1:1.03:0.002 and then, heat-treated at 845 °C under an oxygen atmosphere for 8 hours to manufacture a second positive electrode active material including a second lithium nickel-cobalt-based composite oxide having a composition of Li_{1.03}Ni_{0.968}Co_{0.02}Mn_{0.01}Zr_{0.002}O₂ in the form of single particles having an average particle diameter (D₅₀) of 3 µm.

### Manufacturing of Positive Electrode

The first positive electrode active material and the second positive electrode active material were mixed in a weight ratio of 7:3 to manufacture a final positive electrode active material, and 98.5 wt% of the positive electrode active material, 1.0 wt% of a polyvinylidene fluoride binder, and 0.5 wt% of a carbon nanotube conductive material were mixed to prepare a positive electrode active material layer slurry. The slurry was coated on an aluminium foil current collector and then dried and compressed to manufacture a positive electrode.

### Manufacturing of Coin-type Half-cell

The positive electrode, a lithium metal counter electrode, and an electrolyte were used to manufacture a coin-type half-cell according to a common method. The electrolyte was prepared by dissolving 1 M LiPF₆ in a mixed solvent of ethylene carbonate and dimethyl carbonate in a volume ratio of 3:7, and a polytetrafluoroethylene separator was used in the half-cell.

### Example 2

### Preparation of First Positive Electrode Active Material

Ni_{0.90}Co_{0.03}Al_{0.01}(OH)₂, LiOH, and WO₃ were mixed in a mole ratio of 1:1.03:0.001 and then heat-treated at 750 °C under an oxygen atmosphere for 8 hours to manufacture a first positive electrode active material including a first lithium nickel-cobalt-based composite oxide having a composition of Li_{1.03}Ni_{0.950}Co_{0.03}Al_{0.01}W_{0.001}O₂ in the form of secondary particles having an average particle diameter (D₅₀) of 13 µm.

### Preparation of Second Positive Electrode Active Material

Ni_{0.97}Co_{0.02}Mn_{0.01}(OH)₂, LiOH, and SrO were mixed in a mole ratio of 1:1.05:0.001 and then heat-treated at 845 °C under an oxygen atmosphere for 8 hours to manufacture a second positive electrode active material including a second lithium nickel-cobalt-based composite oxide having a composition of Li_{1.05}Ni_{0.060}Co_{0.02}Mn_{0.01}Sr_{0.001}O₂ in the form of single particles having an average particle diameter (D₅₀) of 3 µm.

A positive electrode and a coin-type half-cell were manufactured substantially in the same manner as in Example 1.

### Example 3

### Preparation of First Positive Electrode Active Material

Ni_{0.96}Co_{0.02}Al_{0.01}Mn_{0.01}(OH)₂, LiOH, B₂O₃, and WO₃ were mixed in a mole ratio of 1:1.05:0.005:0.001 and then heat-treated at 750 °C under an oxygen atmosphere for 8 hours to manufacture a first positive electrode active material including a first lithium nickel-cobalt-based composite oxide having a composition of Li_{1.05}Ni_{0.949}Co_{0.02}Al_{0.01}Mn_{0.01}B_{0.01}W_{0.001}O₂ in the form of secondary particles having an average particle diameter (D₅₀) of 13 µm.

### Preparation of Second Positive Electrode Active Material

Ni_{0.96}Co_{0.02}Al_{0.01}Mn_{0.01}(OH)₂, LiOH, ZrO₂, and SrO were mixed in a mole ratio of 1:1.05:0.001:0.001 and then, heat-treated at 845 °C under an oxygen atmosphere for 8 hours to manufacture a second positive electrode active material including a second lithium nickel-cobalt-based composite oxide having a composition of Li_{1.05}Ni_{0.958}Co_{0.02}Al_{0.01}Mn_{0.01}Zr_{0.001}Sr_{0.001}O₂ in the form of single particles having an average particle diameter (D₅₀) of 3 µm.

A positive electrode and a coin-type half-cell were manufactured substantially in the same manner as in Example 1.

### Example 4

### Preparation of First Positive Electrode Active Material

Ni_{0.96}Co_{0.03}Mn_{0.01}(OH)₂, LiOH, Y₂O₃, and MoO₃ were mixed in a mole ratio of 1:1.03:0.0005:0.001 and then, heat-treated at 750 °C under an oxygen atmosphere for 8 hours to manufacture a first positive electrode active material including a first lithium nickel-cobalt-based composite oxide having a composition of Li_{1.03}Ni_{0.958}Co_{0.03}Mn_{0.01}Y_{0.001}Mo_{0.001}O₂ in the form of secondary particles having an average particle diameter (D₅₀) of 13 µm.

### Preparation of Second Positive Electrode Active Material

Ni_{0.96}Co_{0.02}Al_{0.01}Mn_{0.01}(OH)₂, LiOH, CeO₂, and Ta₂O₅ were mixed in a mole ratio of 1:1.05:0.001:0.0005 and then, heat-treated at 845 °C under an oxygen atmosphere for 8 hours to manufacture a second positive electrode active material including a second lithium nickel-cobalt-based composite oxide having a composition of Li_{1.05}Ni_{0.958}Co_{0.02}Al_{0.01}Mn_{0.01}Ce_{0.001}Ta_{0.001}O₂ in the form of single particles having an average particle diameter (D₅₀) of 3 µm.

A positive electrode and a coin-type half-cell were manufactured substantially in the same manner as in Example 1.

### Example 5

### Preparation of First Positive Electrode Active Material

Ni_{0.96}Co_{0.03}Mn_{0.01}(OH)₂, LiOH, and WO₃ were mixed in a mole ratio of 1:1.03:0.001 and then, heat-treated at 750 °C under an oxygen atmosphere for 8 hours to manufacture a first positive electrode active material including a first lithium nickel-cobalt-based composite oxide having a composition of Li_{1.03}Ni_{0.959}Co_{0.03}Mn_{0.01}Wo_{0.001}O₂ in the form of secondary particles having an average particle diameter (D₅₀) of 13 µm.

### Preparation of Second Positive Electrode Active Material

Ni_{0.97}Co_{0.02}Mn_{0.01}(OH)₂, LiOH, and SrO₂ were mixed in a mole ratio of 1:1.05:0.001 and then, heat-treated at 845 °C under an oxygen atmosphere for 8 hours to manufacture a second positive electrode active material including a second lithium nickel-cobalt-based composite oxide having a composition of Li_{1.05}Ni_{0.969}Co_{0.02}Mn_{0.01}Sr_{0.001}O₂ in the form of single particles having an average particle diameter (D₅₀) of 3 µm.

A positive electrode and a coin-type half-cell were manufactured substantially in the same manner as in Example 1.

### Example 6

### Preparation of First Positive Electrode Active Material

Ni_{0.96}Co_{0.03}Mn_{0.01}(OH)₂, LiOH, B₂O₃, and WO₃ were mixed in a mole ratio of 1:1.03:0.005:0.001 and then, heat-treated at 750 °C under an oxygen atmosphere for 8 hours to manufacture a first positive electrode active material including a first lithium nickel-cobalt-based composite oxide having a composition of Li_{1.03}Ni_{0.949}Co_{0.03}Mn_{0.01}B_{0.01}W_{0.001}O₂ in the form of secondary particles having an average particle diameter (D₅₀) of 13 µm.

### Preparation of Second Positive Electrode Active Material

Ni_{0.97}Co_{0.02}Mn_{0.01}(OH)₂, LiOH, ZrO₂, and SrO were mixed in a mole ratio of 1:1.05:0.001:0.001 and then, heat-treated at 845 °C under an oxygen atmosphere for 8 hours to manufacture a second positive electrode active material including a second lithium nickel-cobalt-based composite oxide having a composition of Li_{1.05}Ni_{0.968}Co_{0.02}Mn_{0.01}Zr_{0.001}Sr_{0.001}O₂ in the form of single particles having an average particle diameter (D₅₀) of 3 µm.

A positive electrode and a coin-type half-cell were manufactured substantially in the same manner as in Example 1.

### Example 7

### Preparation of First Positive Electrode Active Material

Ni_{0.96}Co_{0.03}Mn_{0.01}(OH)₂, LiOH, Y₂O₃, and MoO₃ were mixed in a mole ratio of 1:1.03:0.0005:0.001 and then, heat-treated at 750 °C under an oxygen atmosphere for 8 hours to manufacture a first positive electrode active material including a first lithium nickel-cobalt-based composite oxide having a composition of Li_{1.03}Ni_{0.958}Co_{0.03}Mn_{0.01}Y_{0.001}Mo_{0.001}O₂ in the form of secondary particles having an average particle diameter (D₅₀) of 13 µm.

### Preparation of Second Positive Electrode Active Material

Ni_{0.97}Co_{0.02}Mn_{0.01}(OH)₂, LiOH, CeO₂, and Ta₂O₅ were mixed in a mole ratio of 1:1.05:0.001:0.0005 and then, heat-treated at 845 °C under an oxygen atmosphere for 8 hours to manufacture a second positive electrode active material including a second lithium nickel-cobalt-based composite oxide having a composition of Li_{1.05}Ni_{0.968}Co_{0.02}Mn_{0.01}Ce_{0.001}Ta_{0.001}O₂ in the form of single particles having an average particle diameter (D₅₀) of 3 µm.

A positive electrode and a coin-type half-cell were manufactured substantially in the same manner as in Example 1.

### Comparative Example 1

### Preparation of First Positive Electrode Active Material

Ni_{0.96}Co_{0.03}Al_{0.01}(OH)₂, LiOH, and ZrO₂ were mixed in a mole ratio of 1:1.03:0.001 and then heat-treated at 750 °C under an oxygen atmosphere for 8 hours to manufacture a first positive electrode active material including a first lithium nickel-cobalt-based composite oxide having a composition of Li_{1.03}Ni_{0.959}Co_{0.03}Al_{0.01}Zr_{0.001}O₂ in the form of secondary particles having an average particle diameter (D₅₀) of 13 µm.

### Preparation of Second Positive Electrode Active Material

Ni_{0.96}Co_{0.02}Al_{0.01}Mn_{0.01}(OH)₂ and LiOH were mixed in a mole ratio of 1:1 and then heat-treated at 845 °C under an oxygen atmosphere for 8 hours to manufacture a second positive electrode active material including a second lithium nickel-cobalt-based composite oxide having a composition of LiNi_{0.96}Co_{0.02}Al_{0.01}Mn_{0.01}O₂ in the form of single particles having an average particle diameter (D₅₀) of 3 µm.

A positive electrode and a coin-type half-cell were manufactured substantially in the same manner as in Example 1.

### Comparative Example 2

### Preparation of First Positive Electrode Active Material

Ni_{0.96}Co_{0.03}Al_{0.01}(OH)₂, LiOH, and WO₃ were mixed in a mole ratio of 1:1.03:0.001 and then heat-treated at 750 °C under an oxygen atmosphere for 8 hours to manufacture a first positive electrode active material including a first lithium nickel-cobalt-based composite oxide having a composition of Li_{1.03}Ni_{0.959}Co_{0.03}Al_{0.01}W_{0.001}O₂ in the form of secondary particles having an average particle diameter (D₅₀) of 13 µm.

### Preparation of Second Positive Electrode Active Material

Ni_{0.96}Co_{0.02}Mn_{0.02}(OH)₂ and LiOH were mixed in a mole ratio of 1:1.05 and then, heat-treated at 845 °C under an oxygen atmosphere for 8 hours to manufacture a second positive electrode active material including a second lithium nickel-cobalt-based composite oxide having a composition of Li_{1.05}Ni_{0.96}Co_{0.02}Mn_{0.02}O₂ in the form of single particles having an average particle diameter (D₅₀) of 3 µm.

A positive electrode and a coin-type half-cell were manufactured substantially in the same manner as in Example 1.

### Comparative Example 3

### Preparation of First Positive Electrode Active Material

Ni_{0.96}Co_{0.02}Mn_{0.02}(OH)₂, LiOH, and B₂O₃ were mixed in a mole ratio of 1:1:0.00075 and then heat-treated at 750 °C under an oxygen atmosphere for 8 hours to manufacture a first positive electrode active material including a first lithium nickel-cobalt-based composite oxide having a composition of LiNi_{0.9585}Co_{0.02}Mn_{0.02}B_{0.0015}O₂ in the form of secondary particles having an average particle diameter (D₅₀) of 13 µm.

### Preparation of Second Positive Electrode Active Material

Ni_{0.97}Co_{0.02}Al_{0.01}(OH)₂ and LiOH were mixed in a mole ratio of 1:1.05 and then heat-treated at 845 °C under an oxygen atmosphere for 8 hours to manufacture a second positive electrode active material including a second lithium nickel-cobalt-based composite oxide having a composition of Li_{1.05}Ni_{0.97}Co_{0.02}Al_{0.01}O₂ in the form of single particles having an average particle diameter (D₅₀) of 3 µm.

A positive electrode and a coin-type half-cell were manufactured substantially in the same manner as in Example 1.

### Comparative Example 4

### Preparation of First Positive Electrode Active Material

Ni_{0.97}Co_{0.02}Al_{0.01}(OH)₂ and LiOH were mixed in a mole ratio of 1:1.03 and then heat-treated at 740 °C under an oxygen atmosphere for 8 hours to manufacture a first positive electrode active material including a first lithium nickel-cobalt-based composite oxide having a composition of Li_{1.03}Ni_{0.97}Co_{0.02}Al_{0.01}O₂ in the form of secondary particles having an average particle diameter (D₅₀) of 13 µm.

### Preparation of Second Positive Electrode Active Material

Ni_{0.96}Co_{0.02}Mn_{0.02}(OH)₂, LiOH, and WO₃ were mixed in a mole ratio of 1:1.05:0.001 and then heat-treated at 845 °C under an oxygen atmosphere for 8 hours to manufacture a second positive electrode active material including a second lithium nickel-cobalt-based composite oxide having a composition of Li_{1.05}Ni_{0.959}Co_{0.02}Mn_{0.02}W_{0.001}O₂ in the form of single particles having an average particle diameter (D₅₀) of 3 µm.

A positive electrode and a coin-type half-cell were manufactured substantially in the same manner as in Example 1.

### Comparative Example 5

### Preparation of First Positive Electrode Active Material

Ni_{0.96}Co_{0.02}Al_{0.01}Mn_{0.01}(OH)₂ and LiOH were mixed in a mole ratio of 1:1.03 and then heat-treated at 740 °C under an oxygen atmosphere for 8 hours to manufacture a first positive electrode active material including a first lithium nickel-cobalt-based composite oxide having a composition of Li_{1.03}Ni_{0.96}Co_{0.02}Al_{0.01}Mn_{0.01}O₂ in the form of secondary particles having an average particle diameter (D₅₀) of 13 µm.

### Preparation of Second Positive Electrode Active Material

Ni_{0.96}Co_{0.02}Al_{0.01}Mn_{0.01}(OH)₂ and LiOH were mixed in a mole ratio of 1:1.05 and then heat-treated at 845 °C under an oxygen atmosphere for 8 hours to manufacture a second positive electrode active material including a second lithium nickel-cobalt-based composite oxide having a composition of Li_{1.05}Ni_{0.96}Co_{0.02}Al_{0.01}Mn_{0.01}O₂ in the form of single particles having an average particle diameter (D₅₀) of 3 µm.

A positive electrode and a coin-type half-cell were manufactured substantially in the same manner as in Example 1.

### Comparative Example 6

### Preparation of First Positive Electrode Active Material

Ni_{0.97}Co_{0.02}Al_{0.01}(OH)₂ and LiOH were mixed in a mole ratio of 1:1.03 and then heat-treated at 740 °C under an oxygen atmosphere for 8 hours to manufacture a first positive electrode active material including a first lithium nickel-cobalt-based composite oxide having a composition of Li_{1.03}Ni_{0.97}Co_{0.02}Al_{0.01}O₂ in the form of secondary particles having an average particle diameter (D₅₀) of 13 µm.

### Preparation of Second Positive Electrode Active Material

Ni_{0.96}Co_{0.02}Mn_{0.02}(OH)₂, LiOH, and ZrO₂ were mixed in a mole ratio of 1:1.05:0.001 and then heat-treated at 845 °C under an oxygen atmosphere for 8 hours to manufacture a second positive electrode active material including a second lithium nickel-cobalt-based composite oxide having a composition of Li_{1.05}Ni_{0.959}Co_{0.02}Mn_{0.02}Zr_{0.001}O₂ in the form of single particles having an average particle diameter (D₅₀) of 3 µm.

A positive electrode and a coin-type half-cell were manufactured substantially in the same manner as in Example 1.

### Comparative Example 7

### Preparation of First Positive Electrode Active Material

Ni_{0.97}Co_{0.02}Al_{0.01}(OH)₂ and LiOH were mixed in a mole ratio of 1:1.03 and then heat-treated at 740 °C under an oxygen atmosphere for 8 hours to manufacture a first positive electrode active material including a first lithium nickel-cobalt-based composite oxide having a composition of Li_{1.03}Ni_{0.97}Co_{0.02}Al_{0.01}O₂ in the form of secondary particles having an average particle diameter (D₅₀) of 13 µm.

### Preparation of Second Positive Electrode Active Material

Ni_{0.96}Co_{0.02}Mn_{0.02}(OH)₂, LiOH, and SrO were mixed in a mole ratio of 1:1.05:0.001 and then heat-treated at 845 °C under an oxygen atmosphere for 8 hours to manufacture a second positive electrode active material including a second lithium nickel-cobalt-based composite oxide having a composition of Li_{1.05}Ni_{0.959}Co_{0.02}Mn_{0.02}Sr_{0.001}O₂ in the form of single particles having an average particle diameter (D₅₀) of 3 µm.

A positive electrode and a coin-type half-cell were manufactured substantially in the same manner as in Example 1.

### Comparative Example 8

### Preparation of First Positive Electrode Active Material

Ni_{0.96}Co_{0.02}Mn_{0.02}(OH)₂, LiOH, and B₂O₃ were mixed in a mole ratio of 1:1.03:0.0075 and then heat-treated at 750 °C under an oxygen atmosphere for 8 hours to manufacture a first positive electrode active material including a first lithium nickel-cobalt-based composite oxide having a composition of Li_{1.03}Ni_{0.945}Co_{0.02}Mn_{0.02}B_{0.015}O₂ in the form of secondary particles having an average particle diameter (D₅₀) of 13 µm.

### Preparation of Second Positive Electrode Active Material

Ni_{0.96}Co_{0.02}Mn_{0.02}(OH)₂, LiOH, and MoO₃ were mixed in a mole ratio of 1:1.05:0.01 and then heat-treated at 845 °C under an oxygen atmosphere for 8 hours to manufacture a second positive electrode active material including a second lithium nickel-cobalt-based composite oxide having a composition of Li_{1.05}Ni_{0.95}Co_{0.02}Mn_{0.01}Mo_{0.01}O₂ in the form of single particles having an average particle diameter (D₅₀) of 3 µm.

A positive electrode and a coin-type half-cell were manufactured substantially in the same manner as in Example 1.

### Comparative Example 9

### Preparation of First Positive Electrode Active Material

Ni_{0.96}Co_{0.02}Mn_{0.02}(OH)₂, LiOH, and B₂O₃ were mixed in a mole ratio of 1:1.03:0.0075 and then heat-treated at 750 °C under an oxygen atmosphere for 8 hours to manufacture a first positive electrode active material including a first lithium nickel-cobalt-based composite oxide having a composition of Li_{1.03}Ni_{0.945}Co_{0.02}Mn_{0.02}B_{0.015}O₂ in the form of secondary particles having an average particle diameter (D₅₀) of 13 µm.

### Preparation of Second Positive Electrode Active Material

Ni_{0.96}Co_{0.02}Mn_{0.02}(OH)₂, and LiOH were mixed in a mole ratio of 1:1.05 and then heat-treated at 845 °C under an oxygen atmosphere for 8 hours to manufacture a second positive electrode active material including a second lithium nickel-cobalt-based composite oxide having a composition of Li_{1.05}Ni_{0.96}Co_{0.02}Mn_{0.02}O₂ in the form of single particles having an average particle diameter (D₅₀) of 3 µm.

A positive electrode and a coin-type half-cell were manufactured substantially in the same manner as in Example 1.

### Comparative Example 10

### Preparation of First Positive Electrode Active Material

Ni_{0.96}Co_{0.02}Mn_{0.02}(OH)₂, LiOH, and WO₃ were mixed in a mole ratio of 1:1.03:0.001 and then heat-treated at 750 °C under an oxygen atmosphere for 8 hours to manufacture a first positive electrode active material including a first lithium nickel-cobalt-based composite oxide having a composition of Li_{1.03}Ni_{0.959}Co_{0.02}Mn_{0.02}W_{0.001}O₂ in the form of secondary particles having an average particle diameter (D₅₀) of 13 µm.

### Preparation of Second Positive Electrode Active Material

Ni_{0.96}Co_{0.02}Mn_{0.02}(OH)₂, and LiOH were mixed in a mole ratio of 1:1.05 and then heat-treated at 845 °C under an oxygen atmosphere for 8 hours to manufacture a second positive electrode active material including a second lithium nickel-cobalt-based composite oxide having a composition of Li_{1.05}Ni_{0.96}Co_{0.02}Mn_{0.02}O₂ in the form of single particles having an average particle diameter (D₅₀) of 3 µm.

A positive electrode and a coin-type half-cell were manufactured substantially in the same manner as in Example 1.

### Comparative Example 11

### Preparation of First Positive Electrode Active Material

Ni_{0.96}Co_{0.02}Mn_{0.02}(OH)₂, and LiOH were mixed in a mole ratio of 1:1.03 and then heat-treated at 750 °C under an oxygen atmosphere for 8 hours to manufacture a first positive electrode active material including a first lithium nickel-cobalt-based composite oxide having a composition of Li_{1.03}Ni_{0.96}Co_{0.02}Mn_{0.02}O₂ in the form of secondary particles having an average particle diameter (D₅₀) of 13 µm.

### Preparation of Second Positive Electrode Active Material

Ni_{0.96}Co_{0.02}Mn_{0.02}(OH)₂, LiOH, and ZrO₂ were mixed in a mole ratio of 1:1.05:0.001 and then heat-treated at 845 °C under an oxygen atmosphere for 8 hours to manufacture a second positive electrode active material including a second lithium nickel-cobalt-based composite oxide having a composition of Li_{1.05}Ni_{0.959}Co_{0.02}Mn_{0.02}Zr_{0.001}O₂ in the form of single particles having an average particle diameter (D₅₀) of 3 µm.

A positive electrode and a coin-type half-cell were manufactured substantially in the same manner as in Example 1.

### Comparative Example 12

### Preparation of First Positive Electrode Active Material

Ni_{0.96}Co_{0.02}Mn_{0.02}(OH)₂, and LiOH were mixed in a mole ratio of 1:1.03 and then heat-treated at 750 °C under an oxygen atmosphere for 8 hours to manufacture a first positive electrode active material including a first lithium nickel-cobalt-based composite oxide having a composition of Li_{1.03}Ni_{0.96}Co_{0.02}Mn_{0.02}O₂ in the form of secondary particles having an average particle diameter (D₅₀) of 13 µm.

### Preparation of Second Positive Electrode Active Material

Ni_{0.96}Co_{0.02}Mn_{0.02}(OH)₂, LiOH, and SrO were mixed in a mole ratio of 1:1.05:0.001 and then heat-treated at 845 °C under an oxygen atmosphere for 8 hours to manufacture a second positive electrode active material including a second lithium nickel-cobalt-based composite oxide having a composition of Li_{1.05}Ni_{0.959}Co_{0.02}Mn_{0.02}Sr_{0.001}O₂ in the form of single particles having an average particle diameter (D₅₀) of 3 µm.

A positive electrode and a coin-type half-cell were manufactured substantially in the same manner as in Example 1.

The positive electrode active materials of the examples and the comparative examples are summarized in Table 1. Herein, when any of Ni_{0.96}Co_{0.02}Mn_{0.02}(OH)₂, Ni_{0.97}Co_{0.02}Mn_{0.01}(OH)₂, or Ni_{0.96}Co_{0.03}Mn_{0.01}(OH)₂ is used as the positive electrode active material precursor, it may be expressed as 'NCM', when either Ni_{0.96}Co_{0.03}Al_{0.01}(OH)₂ or Ni_{0.97}Co_{0.02}Al_{0.01}(OH)₂ is used as the positive electrode active material precursor, it may be expressed as 'NCA', and when Ni_{0.96}Co_{0.02}Al_{0.01}Mn_{0.01}(OH)₂ is used as the positive electrode active material precursor, it may be expressed as 'NCAM'.

### Evaluation Example 1: Initial Charge/discharge Capacity

The rechargeable lithium battery cells according to the examples and the comparative examples were charged to an upper limit voltage of 4.3 V at a constant current of 0.2 C and to 0.05 C at the constant voltage and then discharged to a cut-off voltage of 3.0 V at 0.2 C at 25 °C for initial charge and discharge. Initial charge capacity (0.2 C charge capacity (mAh/g)) and initial discharge capacity (0.2 C discharge capacity (mAh/g)) thereof are shown in Table 1.

### Evaluation Example 2: High-temperature Cycle-life

After the initial charge and discharge of Evaluation Example 1, the cells were 50 cycles or more charged and discharged at 1.0 C within a voltage range of 3.0 V to 4.4 V at 45 °C to calculate a ratio (Cycle-life (%, 45 °C, 50^{th}cyc) of 50th cycle discharge capacity to the initial discharge capacity. The results are shown in Table 1.

### Evaluation Example 3: Evaluation of Gas Amount Generated at 80 °C storage

The rechargeable lithium battery cells of the examples and the comparative examples were manufactured into 4.4 V grade 30 mAh cells and allowed to stand at 80 °C for 30 days and then measured with respect to a gas amount (gas amount generated at 80 °C storage or Gas generation amount at 80 °C storage) (ml) generated at the 30th day by using a refinery gas analyzer (Refinery Gas Analysis; RGA). The results are shown in Table 1.

**Table 1**

| | First positive electrode active material | | Second positive electrode active material | | 0.2 C charge capacit y (mAh/g) | 0.2 C discharge capacity (mAh/g) | Cycle-life (%, 45 °C, 50cyc ) | Gas gen. amount (ml) |
|---|---|---|---|---|---|---|---|---|
| | Positive electrode active material | Doping element | Positive electrode active material | Doping element | | | | |
| Ex. 1 | NCM | B | NCM | Zr | 249.7 | 223.2 | 96.3 | 1.00 |
| Ex. 2 | NCA | W | NCM | Sr | 247.2 | 221.1 | 96.4 | 0.99 |
| Ex. 3 | NCAM | B, W | NCAM | Zr, Sr | 246.4 | 220.6 | 96.7 | 0.91 |
| Ex. 4 | NCM | Y, Mo | NCAM | Ce, Ta | 248.4 | 221.5 | 95.9 | 0.93 |
| Ex. 5 | NCM | W | NCM | Sr | 248.2 | 221.6 | 96.1 | 0.98 |
| Ex. 6 | NCM | B, W | NCM | Zr, Sr | 248.8 | 223.7 | 96.1 | 0.99 |
| Ex. 7 | NCM | Y, Mo | NCM | Ce, Ta | 246.2 | 220.1 | 96.0 | 0.96 |
| Comp. Ex. 1 | NCA | Zr | NCAM | - | 249.1 | 220.3 | 93.2 | 1.69 |
| Comp. Ex. 2 | NCA | W | NCM | - | 249.7 | 221.8 | 93.0 | 1.88 |
| Comp. Ex.3 | NCM | B | NCA | - | 249.4 | 222.6 | 95.4 | 2.13 |
| Comp. Ex. 4 | NCA | - | NCM | W | 248.3 | 222.9 | 93.6 | 1.70 |
| Comp. Ex. 5 | NCAM | - | NCAM | - | 249.5 | 223.1 | 94.6 | 1.23 |
| Comp. Ex. 6 | NCA | - | NCM | Zr | 249.7 | 221.8 | 93.8 | 1.62 |
| Comp. Ex. 7 | NCA | - | NCM | Sr | 248.9 | 221.0 | 93.0 | 1.06 |
| Comp. Ex. 8 | NCM | B | NCM | Mo | 249.5 | 220.5 | 95.2 | 2.36 |
| Comp. Ex. 9 | NCM | B | NCM | - | 248.3 | 217.5 | 94.3 | 3.03 |
| Comp. Ex. 10 | NCM | W | NCM | - | 247.5 | 216.1 | 93.9 | 2.57 |
| Comp. Ex. 11 | NCM | - | NCM | Zr | 247.9 | 216.9 | 94.5 | 2.35 |
| Comp. Ex. 12 | NCM | - | NCM | Sr | 246.6 | 216.8 | 94.1 | 2.65 |

Referring to Table 1, the examples, which included a first positive electrode active material including a first lithium nickel-cobalt-based composite oxide doped with at least one element selected from B, W, Y, and Mo and a second positive electrode active material including a second lithium nickel-cobalt-based composite oxide doped with at least one element selected from and Zr, Sr, Ce, and Ta, can be compared with the comparative examples, in which at least one of the corresponding doping elements was not doped. The examples exhibited excellent high-temperature cycle-life characteristics and a small gas amount generated at the 80 °C storage as comparted to the comparative examples.

In particular, Examples 1, 5, 6, and 7, in which NCM was used as first and second positive electrode active materials, at least one element selected from B, W, Y, and Mo was doped on the first positive electrode active material, and at least one element selected from and Zr, Sr, Ce, and Ta was doped on the second positive electrode active material, exhibited excellent high-temperature cycle-life characteristics and a small gas amount generated during the 80 °C storage as compared to Comparative Examples 8 to 12.

While this disclosure has been described in connection with what is presently considered to be practical example embodiments, it is to be understood that the disclosure is not limited to the disclosed embodiments. On the contrary, it is intended to cover various modifications and equivalent arrangements within the scope of the appended claims.

**<Description of Symbols>**

| | | | |
|---|---|---|---|
| 100: | rechargeable lithium battery | 10: | positive electrode |
| 11: | positive electrode lead tab | 12: | positive electrode terminal |
| 20: | negative electrode | 21: | negative electrode lead tab |
| 22: | negative electrode terminal | 30: | separator |
| 40: | electrode assembly | 50: | case |
| 60: | sealing member | 70: | electrode tab |
| 71: | positive electrode tab | 72: | negative electrode tab |

## Claims

1. A positive electrode active material comprising
a first positive electrode active material comprising a first lithium nickel-cobalt-based composite oxide doped with at least one of B, W, Y, and Mo, the first positive electrode active material being in a form of secondary particles that are formed by agglomerating a plurality of primary particles, with at least a portion of the primary particles having a radial arrangement structure; and
a second positive electrode active material comprising a second lithium nickel-cobalt-based composite oxide doped with at least one of Zr, Sr, Ce, and Ta, the second positive electrode active material in a form of single particles.

2. The positive electrode active material as claimed in claim 1, wherein, in each of the first lithium nickel-cobalt-based composite oxide and second lithium nickel-cobalt-based composite oxide, a nickel amount based on 100 mol% of total metal excluding lithium is greater than or equal to 80 mol%.

3. The positive electrode active material as claimed in claim 1 or claim 2, wherein both B and W are doped in the first lithium nickel-cobalt-based composite oxide.

4. The positive electrode active material as claimed in any preceding claim, wherein both Y and Mo are doped in the first lithium nickel-cobalt-based composite oxide.

5. The positive electrode active material as claimed in any preceding claim, wherein the first lithium nickel-cobalt-based composite oxide doped with at least one of B, W, Y, and Mo is represented by Chemical Formula 1:
**[Chemical Formula 1]** Liₐ₁Niₓ₁Co_{y1}Mn_{z1}Al_{w1}B_{c1}W_{d1}Yₑ₁Mo_{f1}M¹_{g1}O_{2-b1}X_{b1}
wherein, in Chemical Formula 1, 0.9≤a1≤1.8, 0.8≤x1≤0.98, 0.01≤y1≤0.19, 0≤z1≤0.19, 0≤w1≤0.19, 0≤c1≤0.03, 0≤d1≤0.01, 0≤e1≤0.01, 0≤f1≤0.03, 0≤g1≤0.02, 0.9≤x1+y1+z1+w1+c1+d1+e1+f1+g1≤1.1, 0≤b1≤0.1, M¹ is one or more of Ba, Ca, Ce, Cr, Cu, Fe, Mg, Nb, Si, Sn, Sr, Ti, V, and Zr, and X is one or more of F, P, and S.

6. The positive electrode active material as claimed in any preceding claim, wherein an average particle diameter (D₅₀) of the first positive electrode active material is 7 µm to 30 µm.

7. The positive electrode active material as claimed in any preceding claim, wherein, based on 100 wt% of the total of the first positive electrode active material and the second positive electrode active material, the positive electrode active material comprises 40 wt% to 90 wt% of the first positive electrode active material and 10 wt% to 60 wt% of the second positive electrode active material.

8. The positive electrode active material as claimed in any preceding claim, wherein Zr and Sr are doped into the second lithium nickel-cobalt-based composite oxide.

9. The positive electrode active material as claimed in any preceding claim, wherein Ce and Ta are doped into the second lithium nickel-cobalt-based composite oxide.

10. The positive electrode active material as claimed in any preceding claim, wherein the first lithium nickel-cobalt-based composite oxide doped with one or more of Zr, Sr, Ce, and Ta is represented by Chemical Formula 2:
**[Chemical Formula 2]** Liₐ₂Niₓ₂Co_{y2}Mn_{z2}Al_{w2}Zr_{c2}Sr_{d2}Ceₑ₂Ta_{f2}M²_{g2}O_{2-b2}X_{b2}
wherein, in Chemical Formula 2, 0.9≤a2≤1.8, 0.8≤x2≤0.98, 0.01≤y2≤0.19, 0≤z2≤0.19, 0≤w2≤0.19, 0≤c2≤0.004, 0≤d2≤0.003, 0≤e2≤0.002, 0≤f2≤0.002, 0≤g2≤0.02, 0.9≤x2+y2+z2+w2+c2+d2+e2+f2+g2≤1.1, 0≤b2≤0.1, M² is one or more of Ba, Ca, Cr, Cu, Fe, Mg, Nb, Si, Sn, Ti, and V, and X is one or more of F, P, and S.

11. The positive electrode active material as claimed in any preceding claim, wherein an average particle diameter (D₅₀) of the second positive electrode active material is 0.5 µm to 4 µm.

12. A positive electrode comprising
a current collector;
a positive electrode active material layer on the current collector,
wherein the positive electrode active material layer comprises the positive electrode active material as claimed in any one of claims 1 to 11.

13. The positive electrode as claimed in claim 12, wherein the positive electrode active material layer has a density of 3.4 g/cc to 3.9 g/cc.

14. A rechargeable lithium battery, comprising
the positive electrode as claimed in claim 12 or claim 13;
a negative electrode; and
an electrolyte.
